Europäisches Patentamt

European Patent Office

Office européen des brevets

(11) Numéro de publication: **0 437 138 A1**

## (12) DEMANDE DE BREVET EUROPEEN

(21) Numéro de dépôt: 90403714.0

(22) Date de dépôt: 20.12.90

(51) Int. Cl.⁵: **B60R 22/44**, A44B 11/04

(30) Priorité: 05.01.90 FR 9000069

(43) Date de publication de la demande:
17.07.91 Bulletin 91/29

(84) Etats contractants désignés:
DE ES GB IT SE

(71) Demandeur: **Mordchelles-Regnier, Georges**
**147, route de St Germain**
**F-78640 Villiers St Frederic(FR)**

(72) Inventeur: **Mordchelles-Regnier, Georges**
**147, route de St Germain**
**F-78640 Villiers St Frederic(FR)**

(74) Mandataire: **Ramey, Daniel et al**
**Cabinet Ores 6 Avenue de Messine**
**F-75008 Paris(FR)**

(54) Butée de réglage d'un élément coulissant.

(57) La butée selon l'invention comprend un corps (10) à deux faces parallèles internes (16 et 18) entre lesquelles s'étend une sangle (14).

La face (16) comprend des saillies souples ou élastiquement déformables (22), par exemple des poils de brosse, dont l'extrémité est en appui sur la sangle (14); la butée permet le coulissement de la sangle dans le sens de l'orientation de l'extrémité des saillies (22) et freine ou empêche son coulissement dans le sens opposé.

L'invention s'applique notamment aux ceintures de sécurité à enrouleur pour véhicules automobiles.

FIG.1

## BUTEE DE REGLAGE D'UN ELEMENT COULISSANT

L'invention concerne une butée de réglage d'un élément coulissant tel par exemple qu'une ceinture d'habillement, un bracelet de montre, une sangle de conditionnement ou de maintien, une ceinture de sécurité, notamment à enrouleur automatique, pour véhicule automobile, etc, cet élément pouvant être souple ou rigide.

Les butées de ce genre qui sont actuellement utilisées pour le réglage de position d'éléments coulissants, notamment des ceintures de sécurité, soit sont peu commodes à manipuler et nécessitent l'usage des deux mains, soit ne maintiennent pas suffisamment l'élément coulissant dans une position choisie.

L'invention a notamment pour but d'éviter ces inconvénients.

La butée selon l'invention comprend un corps présentant au moins une face orientée du côté dudit élément et est caractérisée en ce que cette face comprend des saillies souples ou élastiquement déformables propres à venir en appui sur l'élément coulissant pour freiner ou empêcher son déplacement dans au moins un sens de coulissement à travers la butée.

La butée selon l'invention permet par exemple de régler la position d'une sangle en permettant à celle-ci de coulisser facilement dans un sens et en s'opposant à son coulissement dans l'autre sens. Elle est en outre manoeuvrable d'une seule main sans difficultés.

Selon une autre caractéristique de l'invention, les saillies précitées sont filiformes et sont par exemple constituées par des poils de brosse dont une extrémité est implantée dans la face précitée de la butée et dont l'extrémité libre est applicable sur l'élément.

L'orientation de ces saillies ou poils de brosse dans un sens ou dans l'autre détermine le sens de coulissement autorisé de l'élément.

Selon encore une autre caractéristique de l'invention, la butée comprend une plaque rigide traversée par lesdites saillies et qui est déplaçable par translation dans le corps de la butée parallèlement à la direction de coulissement de l'élément pour orienter les saillies dans un sens ou dans l'autre.

Le déplacement de cette plaque permet ainsi d'inverser le sens de coulissement autorisé de l'élément.

Selon encore une autre caractéristique de l'invention, la butée comprend deux faces opposées entre lesquelles passe l'élément et la distance entre ces deux faces de la butée est réglable, ce qui permet, en réduisant cette distance, de rattraper l'usure des extrémités des saillies prévue sur une face ou bien d'augmenter le freinage de l'élément dans la butée et, en augmentant cette distance, de permettre un coulissement libre de l'élément dans la butée.

Dans la description qui suit, faite à titre d'exemple, on se réfère aux dessins annexés dans lesquels:

- la figure 1 est une vue schématique partielle en perspective d'une butée selon l'invention;
- la figure 2 est une vue schématique en coupe longitudinale d'une variante de réalisation de cette butée;
- la figure 3 est une vue schématique en coupe transversale d'une autre forme de réalisation de la butée selon l'invention;
- la figure 4 est une vue schématique en coupe transversale d'encore une autre forme de réalisation de la butée selon l'invention;
- la figure 5 représente schématiquement une application d'une butée selon l'invention à une ceinture de sécurité à enrouleur.

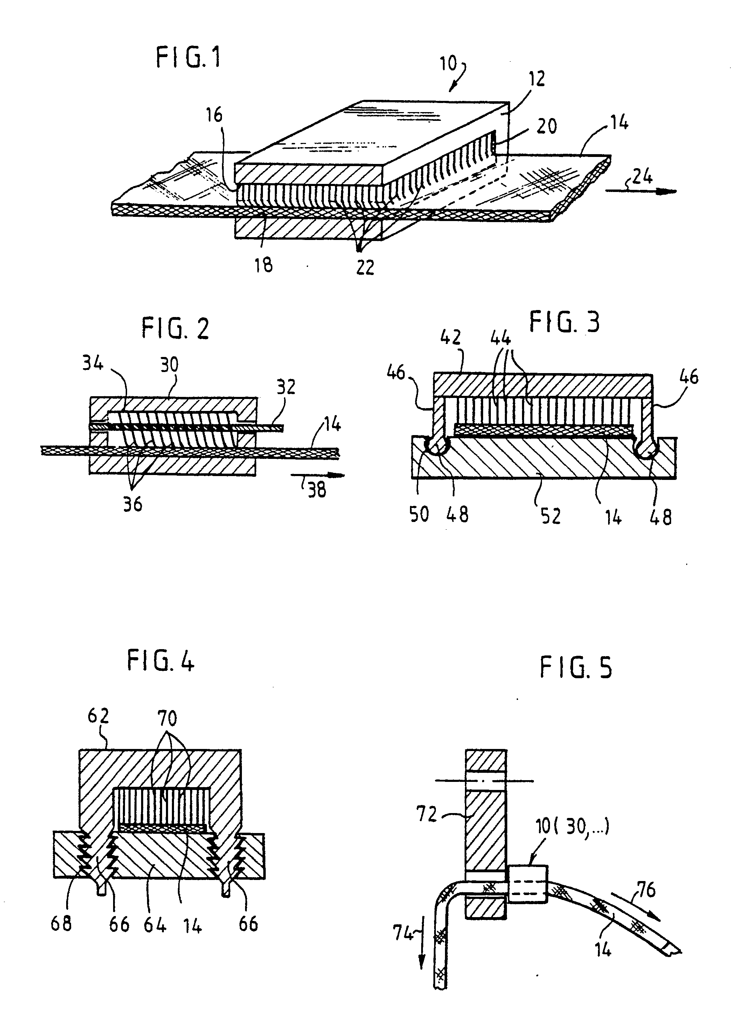

On se réfère d'abord à la figure 1 qui représente schématiquement une butée selon l'invention, traverséepar une sangle plate en matière textile ou analogue.

La butée 10 comprend un corps 12 en matière rigide, qui est par exemple de forme parallélépipédique rectangle et présente une ouverture à section rectangulaire de passage de la sangle 14. Cette ouverture de passage est délimitée dans le corps 12 par deux grandes faces 16 et 18 parallèles au plan de la sangle 14 et par deux petites faces 20 perpendiculaires aux grandes faces 16 et 18. Au moins l'une des grandes faces 16 et 18 présente des saillies 22 souples et/ou élastiquement déformables, qui sont orientées vers l'autre grande face et dont l'extrémité libre est destinée à venir frotter ou glisser sur une face de la sangle 14. Dans l'exemple représenté, la face opposée de la sangle 14 est appliquée sur l'autre grande face 18 du corps de la butée.

Ces saillies 22 peuvent être constituées par des poils de brosse, par exemple du type poils de brosse à dents, ou par des picots en caoutchouc ou analogue ou en matière plastique ou par tout autre moyen approprié. Les saillies ou poils 22 sont perpendiculaires à la face 16 ou inclinés par rapport à cette face dans le sens de coulissement de la sangle 14 indiqué par la flèche 24 et leurs extrémités libres, en particulier dans le cas de poils, sont fléchies dans le sens indiqué par cette flèche. Quand la sangle 14 est déplacée dans le sens de la flèche 24, les saillies ou poils 22 n'opposent qu'une résistance très faible à ce mouvement. Par contre, ils s'opposent à un déplacement de la sangle 24 en sens inverse, jusqu'à ce que la traction exercée sur cette sangle soit supérieure à la force de résistance développée par les saillies ou poils 22. Il se produit alors une inversion de leur inclinaison par rapport à la sangle.

L'orientation initiale des saillies ou poils 22 peut être perpendiculaire à la face 16 du corps 10 de la butée. Ces saillies ou poils 22 peuvent, d'une autre façon, être inclinés par rapport à cette face dans un sens préférentiel prédéterminé de déplacement d'une sangle 14.

L'invention propose également un moyen (figure 2) pour inverser à volonté l'orientation préférentielle de ces poils ou saillies 22. Dans ce cas, le corps 30 de la butée est traversé par une plaque perforée rigide 32, parallèle à la face 34 dont dépendent les poils ou saillies 36, et qui est par exemple traversée librement par ces poils et saillies. La plaque 32 est déplaçable par translation parallèlement à la face 34 entre deux positions extrêmes fixées par exemple par des butées ou des points durs, qui déterminent chacune une orientation préférentielle des poils ou saillies 36 dans un sens 38 de coulissement de la sangle 40 ou dans le sens opposé.

En variante, la plaque 32 peut être reliée aux poils ou saillies par des moyens formant articulation, de telle sorte que le déplacement de cette plaque dans un sens ou dans l'autre par rapport au corps de la butée se traduise par l'inclinaison dans un sens ou dans l'autre des poils ou saillies par rapport à la sangle.

Le corps de la butée peut être réalisé en une seule pièce, auquel cas la sangle doit être introduite par une extrémité libre dans la butée, ou bien il peut être réalisé en deux parties indépendantes propres à êtres fixées amoviblement l'une à l'autre. Par exemple, la partie supérieure 42 de la butée, comportant les saillies ou poils 44, comprend des doigts de clipsage 46 dont les extrémités sphériques 48 sont propres à être engagées par déformation élastique dans des cavités de forme correspondante 50 de la partie inférieure 52 de la butée. Dans la forme de réalisation représentée en figure 4, la partie supérieure 62 de la butée comprend, pour sa fixation sur la partie inférieure 64, des pattes 66 à dents ou crochets propres à être engagées dans des trous de forme correspondante 68 de ladite partie inférieure 64. Cette forme de réalisation permet de régler la distance entre les parties 62 et 64 de la butée et donc, l'action des saillies ou poils 70 sur la sangle 14.

Dans ces formes de réalisation, les deux parties de la butée peuvent être indépendantes l'une de l'autre ou bien être montées à pivotement l'une sur l'autre autour d'un axe longitudinal ou transversal par rapport à la sangle 14.

La figure 5 représente l'application d'une butée selon l'invention à une ceinture de sécurité à enrouleur pour véhicule automobile. La ceinture de sécurité est constituée par la sangle 14 qui coulisse librement dans une boucle 72 fixée à un montant latéral de la carrosserie du véhicule. La ceinture 14 est soumise en permanence à une traction exercée par l'enrouleur automatique dans le sens de la flèche 74. Une butée selon l'invention, du type représenté dans les figures 1, 2, 3 ou 4, est montée sur la ceinture 14, du côté de la boucle 72 opposé à l'enrouleur. La butée est réglée pour permettre le coulissement de la sangle 14 dans le sens de la flèche 76 et pour freiner ou empêcher son coulissement dans le sens opposé. La position de la butée sur la ceinture 14 est déterminée par l'utilisateur de la ceinture de sécurité, de telle manière que celui-ci soit maintenu par cette ceinture de sécurité sans être gêné. La butée empêche la force de traction exercée par l'enrouleur de s'exercer sur le corps de la personne.

Dans le cas où la butée selon l'invention est utilisée comme organe de fermeture ou de réglage d'une ceinture d'habillement ou d'un bracelet, une extrémité de la ceinture ou du bracelet est fixée à la butée et l'autre extrémité traverse cette butée à coulissement.

La butée selon l'invention est également applicable au réglage de la position d'un élément coulissant autre qu'une sangle, par exemple une tige ou une barre, éventuellement rigide à section quelconque.

## Revendications

1. Butée de réglage d'un élément coulissant, tel par exemple qu'une ceinture, un bracelet de montre, une sangle de conditionnement, une ceinture de sécurité ou analogue, la butée comprenant un corps présentant au moins une face sensiblement orientée vers ledit élément, caractérisée en ce qu'au moins cette face (16) comprend des saillies (22) souples ou élastiquement déformables propres à venir en appui sur l'élément (14) pour freiner ou empêcher son déplacement dans au moins un sens de coulissement par rapport à ladite butée (10).

2. Butée selon la revendication 1, caractérisée en ce que les saillies (22) sont orientées, au moins à leurs extrémités libres, dans un sens (24) de coulissement autorisé de l'élément (14).

3. Butée selon la revendication 2, caractérisée en ce que cette orientation des saillies (22) est obtenue par flexion de leurs extrémités libres en appui sur l'élément (14).

4. Butée selon la revendication 2, caractérisée en ce que cette orientation des saillies (22) est réversible, pour freiner ou empêcher le coulissement de l'élément (14) dans le sens opposé au sens (24) précité.

5. Butée selon l'une des revendications 1 à 4, caractérisée en ce qu'elle est traversée par l'élément (14).

6. Butée selon l'une des revendications précédentes, caractérisée en ce que lesdites saillies (22) sont filiformes et sont par exemple constituées par des poils de brosse dont une extrémité est implantée dans la face (16) précitée de la butée.

7. Butée l'une des revendications précédentes, caractérisée en ce qu'elle comprend une plaque rigide (32) traversée par lesdites saillies (36) et déplaçables par translation parallèlement à la direction de coulisse-mentde l'élément (14) pour orienter les saillies (36) dans le sens de coulissement autorisé de cet élément.

8. Butée selon l'une des revendications précédentes, caractérisée en ce qu'elle comprend deux faces opposées (16, 18) entre lesquelles passe l'élément coulissant (14), l'une au moins de ces faces présentant les saillies (22) précitées.

9. Butée selon la revendication 8 caractérisée en ce que la distance entre les deux faces précitées est réglable.

10. Butée selon l'une des revendications précédentes, caractérisée en ce qu'elle est réalisée en deux parties (42, 52; 62,64) fixées amoviblement l'une à l'autre.

FIG.1

FIG. 2

FIG. 3

FIG. 4

FIG. 5

5

Office européen
des brevets

RAPPORT DE RECHERCHE
EUROPEENNE

Numéro de la demande

**EP 90 40 3714**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-4 268 067  (R. V. THOMAS)<br>* colonne 2, lignes 54 - 63; figures 1-6 * * colonne 3, lignes 10 - 43 *<br>– – – | 1 | B 60<br>R 22/44<br>A 44 B 11/04 |
| A | FR-A-2 494 996  (SKOVAJSA, JOSEPH)<br>* page 3, ligne 1 - page 4, ligne 13 * * figures 1a, 1b, 2 *<br>– – – | 1 | |
| A | EP-A-0 026 564  (JOHNSON, COLIN BARKLAY)<br>* page 2, ligne 32 - page 3, ligne 20 * * figures 2, 4 *<br>– – – | 1 | |
| A | EP-A-0 032 477  (ALIX, MAURICE ALAIN JEAN)<br>* page 2, lignes 3 - 16 * * page 3, lignes 14 - 22 @ page 8, lignes 3 - 8; figures *<br>– – – – – | 1 | |

| | | | DOMAINES TECHNIQUES RECHERCHES (Int. Cl.5) |
|---|---|---|---|
| | | | B 60 R |
| | | | – |

Le présent rapport de recherche a été établi pour toutes les revendications

| Lieu de la recherche | Date d'achèvement de la recherche | Examinateur |
|---|---|---|
| La Haye | 11 avril 91 | AREAL CALAMA A. |